# EUROPEAN PATENT SPECIFICATION

(11) **EP 1 754 183 B1**
(45) Date of publication and mention of the grant of the patent: **25.03.2009**
(21) Application number: 05739519.6
(22) Date of filing: 17.05.2005
(51) Int. Cl.: G06K 19/06

(54) **METHOD AND SYSTEM FOR CREATING AN IDENTIFICATION DOCUMENT**
VERFAHREN UND SYSTEM ZUM ERZEUGEN EINES IDENTIFIKATIONSDOKUMENTS
PROCEDE ET SYSTEME DE CREATION D'UN DOCUMENT D'IDENTIFICATION

(30) Priority: 17.05.2004 ZA 200403771
(43) Date of publication of application: 21.02.2007
(73) Proprietor: Dexrad (Proprietary) Limited, 2193 Parktown (ZA)
(72) Inventor: TAME, Gavin, Randall, 0181 Pretoria (ZA)
(74) Representative: Garratt, Peter Douglas
(86) International application number: PCT/IB2005/001333
(87) International publication number: WO 2006/123196

(56) References cited:
- WO-A-01/03077
- WO-A-20/04066536
- US-A1- 2001 050 308
- US-B1- 6 758 400

## Description

### BACKGROUND OF THE INVENTION

THIS invention relates to a method and system for creating an identification document.

Existing identification documents generally comprise an image of an individual to whom the document is issued, together with personal identification data such as the name and identity number of the individual. Due to a general increase in fraud and terrorist activity worldwide, the degree of security offered by conventional identification documents is widely considered to be inadequate, and various measures have been proposed to increase the security of such documents. For example, one approach that has been adopted is the inclusion of smart card technology in passports or other identification documents. However, the inclusion of "high tech" security measures is of limited value in areas where the necessary equipment is not available to apply the necessary identification procedures.

It would be desirable to provide an identification document with enhanced security, the benefits of which can be utilised even in relatively remote locations, or other locations where dedicated security equipment is not available. It would similarly be desirable to provide methods of creating and authenticating such identification documents.

Authentication information coded into multiple two-dimensional barcodes of an identification card is disclosed in WO 2004/066536 which constitutes prior art according to Art. 54(3)EPC.

### SUMMARY OF THE INVENTION

According to the invention there is provided a method of creating an identification document, the method comprising:
acquiring data identifying an individual, including an image of the individual, biometric data and personal identification data;
recording the acquired data on a central database;
printing a first two-dimensional symbolic barcode on the identification document, the first barcode having a relatively high density and including the image of the individual, biometric data and personal identification data; and
printing a second two-dimensional symbolic barcode on the identification document, the second barcode having a relatively low density and including said personal identification data and data for use in a biometric identification process.

The identification document will typically be an identification card printed with human discernable information, including an image of the individual corresponding to the image of the individual included in the first two-dimensional symbolic barcode and the personal identification data included in both the first and second two-dimensional symbolic barcodes.

The biometric data may include fingerprint data acquired from the individual.

The biometric data may further or alternatively include voiceprint data acquired from the individual.

The data included in the first and/or second barcodes is preferably encrypted.

The data contained in the second barcode for use in the biometric identification process is preferably a password corresponding to a password spoken by the user when acquiring the voiceprint data.

The password and the corresponding voiceprint data are preferably stored in the central database for subsequent use in the biometric identification process.

Further according to the invention there is provided a method of authenticating an identification document according to claim 10.

The authentication step may include contacting a registered user of the document creation system, receiving current identification data from the user, and comparing the received current identification data with data in the central database and the data extracted from the second two-dimensional symbolic barcode of the identification document.

The current identification data received from the user may be biometric data such as fingerprint or voiceprint data.

### BRIEF DESCRIPTION OF THE DRAWINGS

- **Figure 1**: is a simplified schematic diagram of a system and method for creating an identification document according to the invention;
- **Figure 2**: is a schematic diagram of one side of an identification card produced by the method and system of Figure 1; and
- **Figure 3**: is a schematic diagram illustrating a method and system for authenticating an identification document created by the method and system of the invention.

### DESCRIPTION OF PREFERRED EMBODIMENTS

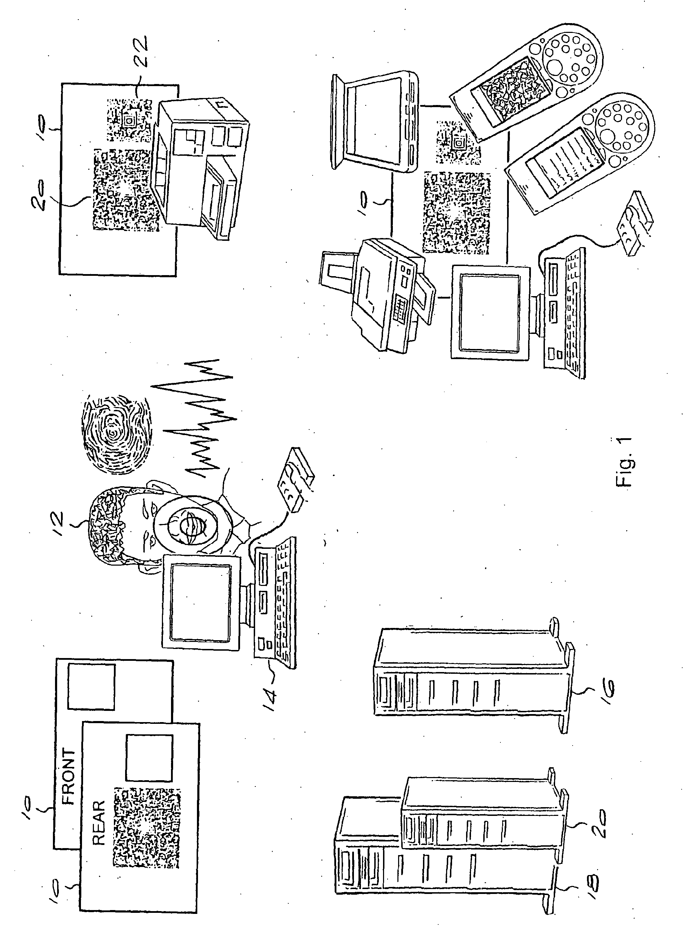

Referring to Figure 1, the first step in the procedure for creating an identification document by the method of the invention involves the pre-printing of the background portion of the identification document. For the purposes of the present description, an identification document in the form of an identity card will be described, but it will be appreciated by those skilled in the art that the identification document could be an identity book, a passport, a drivers license or another identification document.

As shown in Figure 1, the identity card comprises a generally conventional rectangular planar substrate 10 of laminated card or plastics material that is pre-printed with fields for receiving first and second two-dimensional symbolic barcodes, an image of the individual to be identified, and other user-discernable data. This data would typically include the name and identity number of the individual, identifying features such as the colour of the individual's eyes and their height and, optionally, biometric data such as a thumb- or fingerprint and/or signature.

The background of the card may be printed with various security features known as such to those skilled in the art, designed to make copying of the document more difficult and to make it possible to identify all but the most sophisticated copies by visual examination.

When an individual applies for an identity document, their personal details are captured and a unique identity number is created. Additional related data such as private and public keys and personal PIN codes are also created. A digital image of the individuals face is acquired using a digital camera and a digitally scanned image of the individuals signature is also acquired. These images are compressed.

One or more fingerprint images are acquired from the applicant and one or more corresponding finger biometrics templates are created. The personal data and related data mentioned above, the compressed facial image and signature image and the fingerprint template or templates are stored in a record from a main identification database which forms part of a national population identity database or register. At the time of storing a new record on the database, the finger biometric templates and/or other data to be stored can be checked against existing records to determine whether there are duplicate records or applications, possibly with different names.

The next step in the process is the recording of a voice identification password for the individual. The individual 12 is required to register his/her voice on a telephone, cellular telephone or a voice acquisition device connected to a computer at the registration station 14. The individual is guided through the registration process via voice commands and instructed to pronounce a password. Data defining the password and the resulting voiceprint are transmitted to a voice recognition server 16 as a voice record that is indexed by the individual's unique identity number.

The next step in the process is the printing of the human readable details on the card. These details will include the individuals name, identification number and other details as indicated above. An image 18 of the individuals face and signature and, possibly, one or more fingerprints will also be printed on the card.

Apart from the generally conventional information referred to above, first and second two-dimensional symbolic barcodes 20 and 22 are also printed on the card, as described below.

The first, high resolution, two-dimensional symbolic barcode 20 contains a substantial amount of data including the compressed data for the facial and signature images, the individuals personal details and one or more finger biometrics templates.

It will be appreciated by those skilled in the art that other biometrics templates can be acquired instead of, or in addition to, finger biometrics templates. For example, biometric data corresponding to an individuals retina or palm geometry could be acquired.

The first barcode 20 may or may not be copy protected. It may be considered that copy protection of the barcode is unnecessary due to the fact that it can only be read by relatively sophisticated scanners, and due to the fact that it is encrypted. The contents of the first two-dimensional barcode can be read by government departments and other organisations that have the necessary specialised scanners, computer equipment and software to scan and decrypt the contents of the barcode.

The barcode may be protected using the methods described in International patent application no. PCT/IB01/00362.

The second two-dimensional symbolic barcode 22 printed on the card is a coarser, lower resolution and therefore lower density barcode designed to be imaged by conventional imaging devices such as facsimile machines or digital cameras provided on cellular telephones. The second barcode contains the identity number and personal details of the card holder as well as the above mentioned digital keys, personal PIN code and one or more passwords. The second barcode can be used for remote identification at remote locations or any other location where the sophisticated equipment used by government departments and large organisations is not available. Specifically, it can be used in identification procedures by individuals, retail outlets, traffic police at the roadside, and many other locations.

The identity cards may be printed with a colour card printer 24 in the case of plastics (PBC PPT) cards or with colour laser printers or certain inkjet printers in the case of laminated paper inlay cards. Once the card has been printed, it can be issued to the individual to be identified.

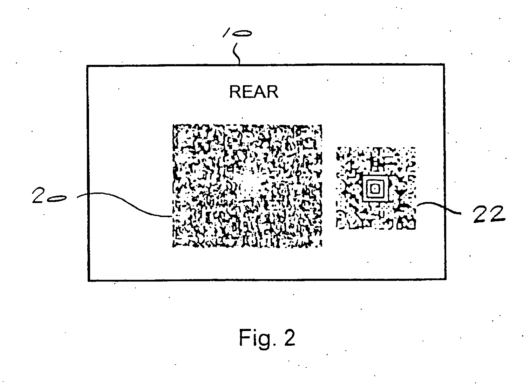

An example of an identity card 10 created by the method and system of the invention is shown in Figure 2, which shows the first and second symbolic barcodes 20 and 22 on the rear of the card.

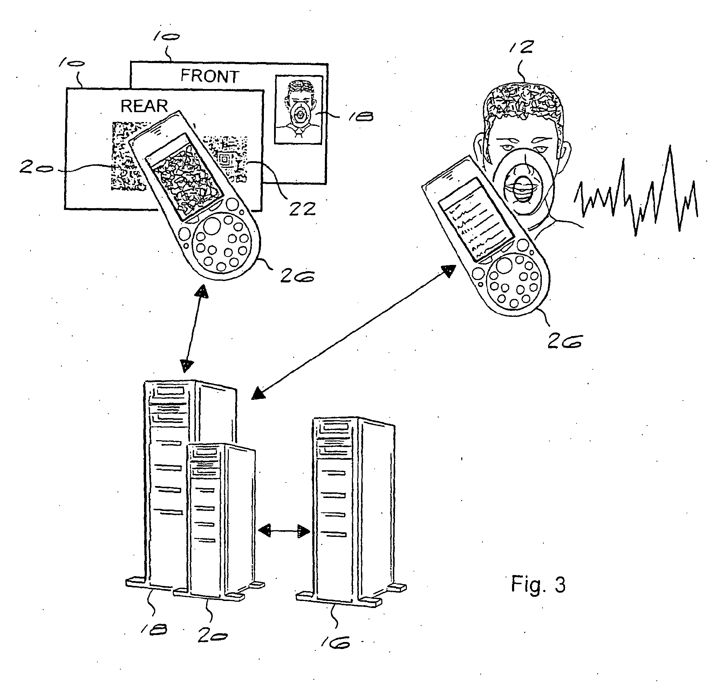

The identification of an individual using the method of the invention will now be described with reference to Figure 3. By way of example, it will be assumed that an individual is applying for a loan, and the loan company does not have sophisticated computers or the necessary card verification equipment, but nevertheless needs positive identification of the loan applicant. It will be appreciated that the procedure described is purely exemplary and for purposes of illustration.

In order to identify the loan applicant, the applicant 12 presents his/her identity card, as produced by the method and system of the invention. Using a conventional imaging device such as a facsimile machine or, conveniently, a cellular telephone 26 equipped with a digital camera, an image of the second, low resolution barcode is acquired and transmitted to an authentication server 18. Preferably, a telephone number for the identification center where the identification server resides is printed on the identity card. The identification server decrypts the transmitted image of the second barcode and extracts the data from it. Assuming that the barcode contains a password for voice identification, a message is transmitted from the identification server 18 to the telephone 26 and the individual to be identified is requested to speak the password into the same cellular telephone used to transmit the barcode image data to the identification server. The password spoken by the person to be identified is transmitted to a voice authentication server 20 for comparison with the stored voiceprint biometrics. If the spoken password matches the biometrics of the stored password, the caller can be advised telephonically or via SMS, for example, that identification of the individual has been successful.

By way of a further example, the individual could have his/her fingerprint biometrics read by a fingerprint reader, with the resulting biometric data being transmitted to the authentication server for verification. However, the use of a spoken password is advantageous as it does not require specialized hardware.

It will be appreciated that the above described process can be varied in a number of different ways. For example, the process may be carried out in a number of steps in a single telephone call, or multiple telephone calls may be required.

It will be appreciated that the above described method and system can be combined with other technology. For example, a financial transaction card could be created having a magnetic stripe, a contact or contact-less memory or smart card chip.

## Claims

1. A method of creating an identification document, the method comprising:
acquiring data identifying an individual, including an image of the individual, biometric data and personal identification data;
recording the acquired data on a central database;
printing a first two-dimensional symbolic barcode (20) on the identification document, the first barcode having a relatively high density and including the image of the individual, biometric data and personal identification data; and
printing a second two-dimensional symbolic barcode (22) on the identification document, the second barcode having a relatively low density and including said personal identification data and further data for use in a biometric identification process.

2. A method according to claim 1 wherein the identification document is printed with human discernable information, including an image of the individual corresponding to the image of the individual included in the first two-dimensional symbolic barcode and the personal identification data included in both the first and second two-dimensional symbolic barcodes.

3. A method according to claim 1 or claim 2 wherein the biometric data includes fingerprint data acquired from the individual.

4. A method according to any one of claims 1 to 3 wherein the biometric data includes voiceprint data acquired from the individual.

5. A method according to any one of claims 1 to 4 wherein the data included in the first and/or second barcodes is encrypted.

6. A method according to claim 4 wherein the data contained in the second barcode for use in the biometric identification process is a password corresponding to a password spoken by the user when acquiring the voiceprint data.

7. A method according to claim 6 wherein the password and the corresponding voiceprint data are stored in the central database for subsequent use in the biometric identification process.

8. A method according to any one of claims 1 to 7 wherein the first barcode has a density sufficiently high to require the use of a specialized scanner and associated software to read and decrypt the contents of the barcode.

9. A method according to any one of claims 1 to 8 wherein the second barcode has a density sufficiently low to be Imaged by a conventional imaging device having an imaging resolution of 200 dpi or less.

10. A method of authenticating an identification document which comprises a substrate on which is printed a first two-dimensional symbolic barcode (20), the first barcode having a relatively high density and including the image of the individual, biometric data and personal identification data, and a second two-dimensional symbolic barcode (22), the second barcode having a relatively low density and including said personal identification data and further data for use in a biometric identification process, the method comprising:
acquiring an image of the second two-dimensional symbolic barcode of an identification document to be authenticated;
transmitting the image to an authentication center;
decoding the image to extract the data contained therein; and
authenticating the identification document by comparing the extracted data with respective recorded data via the authentication center.

11. A method according to claim 10 wherein the image of the second barcode is acquired with a facsimile machine or a digital camera having an imaging resolution of 200 dpi or less.

12. A method according to claim 10 or claim 11 wherein the authentication step includes receiving current identification data from the user, transmitting said current identification data to the authentication center and comparing the received current identification data with data in the central database and the data extracted from the second two-dimensional symbolic barcode of the identification document.

13. A method according to claim 12 wherein the current identification data received from the user is biometric data.

14. A method according to claim 13 wherein the identification data is fingerprint data acquired from the user.

15. A method according to claim 13 wherein the identification data is voiceprint data acquired from the user.

16. A method according to claim 15 wherein the voiceprint data is acquired and transmitted to the authentication center by means of a mobile telephone.

17. A method according to any one of claims 10 to 16 wherein the image of the second two-dimensional barcode is acquired and transmitted to the authentication center by a mobile telephone equipped with a camera.

18. An identification document comprising a substrate on which is printed a first two-dimensional symbolic barcode (20), the first barcode having a relatively high density and including the image of the individual, biometric data and personal identification data, and a second two-dimensional symbolic barcode (22), the second barcode having a relatively low density and including said personal identification data and further data for use in a biometric identification process.

19. An identification document according to claim 18 on which human-discernable information is printed, including an image of the individual corresponding to the image of the individual included in the first two-dimensional symbolic barcode and the personal identification data included in both the first and second two-dimensional symbolic barcodes.

## Patentansprüche

1. Verfahren zum Erzeugen eines Identifikationsdokuments, wobei das Verfahren folgendes umfasst:
das Gewinnen von Daten, die ein Individuum identifizieren, unter Einschluss eines Bilds des Individuums, von biometrischen Daten und persönlichen Identifikationsdaten;
das Aufzeichnen der gewonnenen Daten in einer zentralen Datenbank;
das Drucken eines ersten zweidimensionalen Symbolbarcodes (20) auf dem Identifikationsdokument, wobei der erste Barcode eine relativ hohe Dichte aufweist und das Bild des Individuums, die biometrischen Daten und die persönlichen Identifikationsdaten einschließt; und
das Drucken eines zweiten zweidimensionalen Symbolbarcodes (22) auf dem Identifikationsdokument, wobei der zweite Barcode eine relativ geringe Dichte aufweist und die persönlichen Identifikationsdaten und weitere Daten zur Verwendung in einem biometrischen Identifikationsvorgang einschließt.

2. Verfahren nach Anspruch 1, wobei das Identifikationsdokument zusammen mit unterscheidbaren Humaninformationen gedruckt wird, einschließlich eines Bilds des Individuums, das dem Bild des Individuums, das im ersten zweidimensionalen Symbolbarcode eingeschlossen ist, entspricht, und die persönlichen Identifikationsdaten, die sowohl im ersten als auch im zweiten zweidimensionalen Symbolbarcode eingeschlossen sind.

3. Verfahren nach Anspruch 1 oder 2, wobei die biometrischen Daten Fingerabdruckdaten, die vom Individuum gewonnen worden sind, einschließen.

4. Verfahren nach einem der Ansprüche 1 bis 3, wobei die biometrischen Daten Stimmabdruckdaten (voiceprint data), die vom Individuum gewonnen worden sind, einschließt.

5. Verfahren nach einem der Ansprüche 1 bis 4, wobei die im ersten und/oder zweiten Barcode eingeschlossenen Daten verschlüsselt sind.

6. Verfahren nach Anspruch 4, wobei es sich bei dem im zweiten Barcode zur Verwendung im biometrischen Identifikationsvorgang enthaltenen Daten um ein Passwort handelt, das einem Passwort entspricht, das vom Verwender bei der Gewinnung der Stimmdaten gesprochen worden ist.

7. Verfahren nach Anspruch 6, wobei das Passwort und die entsprechenden Stimmdaten in der zentralen Datenbank für die anschließende Verwendung im biometrischen Identifikationsvorgang gespeichert werden.

8. Verfahren nach einem der Ansprüche 1 bis 7, wobei der erste Barcode eine ausreichend hohe Dichte aufweist, dass die Verwendung eines speziellen Scanners und einer damit verbundenen Software erforderlich ist, um den Inhalt des Barcodes zu lesen und zu entschlüsseln.

9. Verfahren nach einem der Ansprüche 1 bis 8, wobei der zweite Barcode eine ausreichend niedrige Dichte aufweist, um eine Abbildung mit einer herkömmlichen Abbildungsvorrichtung mit einer Bildauflösung von 200 dpi oder weniger zu erstellen.

10. Verfahren zur Echtheitsprüfung eines Identifikationsdokuments, das ein Substrat umfasst, auf das ein erster zweidimensionaler Symbolbarcode (20), wobei der erste Barcode eine relativ hohe Dichte aufweist und das Bild des Individuums, biometrische Daten und persönliche Identifikationsdaten einschließt, und ein zweiter zweidimensionaler Symbolbarcode (22) gedruckt werden, wobei der zweite Barcode eine relativ geringe Dichte aufweist und die persönlichen Identifikationsdaten und ferner Daten zur Verwendung in einem biometrischen Identifikationsvorgang einschließt, wobei das Verfahren folgendes umfasst:
das Gewinnen eines Bilds des zweiten zweidimensionalen Symbolbarcodes eines der Echtheitsprüfung zu unterziehenden Identifikationsdokuments;
das Übertragen des Bilds in ein Zentrum zur Echtheitsprüfung;
das Decodieren des Bilds, um die darin enthaltenen Daten zu extrahieren; und
die Durchführung der Echtheitsprüfung des Identifikationsdokuments durch Vergleich der extrahierten Daten mit den entsprechenden Daten, die über das Zentrum zur Echtheitsprüfung aufgezeichnet worden sind.

11. Verfahren nach Anspruch 10, wobei das Bild des zweiten Barcodes mit einem Faksimilegerät oder einer Digitalkamera mit einer Bildauflösung von 200 dpi oder weniger erstellt wird.

12. Verfahren nach Anspruch 10 oder 11, wobei die Stufe der Echtheitsprüfung den Empfang der derzeitigen Identifikationsdaten vom Verwender, das Übertragen der derzeitigen Identifikationsdaten in das Zentrum zur Echtheitsprüfung und das Vergleichen der empfangenen derzeitigen Identifikationsdaten mit den Daten in der zentralen Datenbank und den Daten, die aus dem zweiten zweidimensionalen Symbolbarcode des Identifikationsdokuments extrahiert worden sind, einschließt.

13. Verfahren nach Anspruch 12, wobei es sich bei den vom Verwender empfangenen derzeitigen Identifikationsdaten um biometrische Daten handelt.

14. Verfahren nach Anspruch 13, wobei es sich bei den Identifikationsdaten um vom Verwender abgenommene Fingerabdruckdaten handelt.

15. Verfahren nach Anspruch 13, wobei es sich bei den Identifikationsdaten um vom Verwender gewonnene Stimmdaten handelt.

16. Verfahren nach Anspruch 15, wobei die Stimmdaten mittels eines mobilen Telefons gewonnen und übertragen werden.

17. Verfahren nach einem der Ansprüche 10 bis 16, wobei das Bild des zweiten zweidimensionalen Barcodes von einem mobilen Telefon, das mit einer Kamera ausgerüstet ist, gewonnen und zum Zentrum zur Echtheitsprüfung übertragen werden.

18. Identifikationsdokument, umfassend ein Substrat, auf das ein erster zweidimensionaler Symbolbarcode (20), wobei der erste Barcode eine relativ hohe Dichte aufweist und das Bild des Individuums, biometrische Daten und persönliche Identifikationsdaten einschließt, und ein zweiter zweidimensionaler Symbolbarcode (22) gedruckt werden, wobei der zweite Barcode eine relativ geringe Dichte aufweist und die persönlichen Identifikationsdaten und ferner Daten zur Verwendung in einem biometrischen Identifikationsvorgang einschließt.

19. Identifikationsdokument nach Anspruch 18, auf das unterscheidbare Humaninformationen gedruckt sind, einschließlich eines Bilds des Individuums, das dem Bild des Individuums, das im ersten zweidimensionalen Barcode eingeschlossen ist, entspricht, und der persönlichen Identifikationsdaten, die sowohl im ersten als auch im zweiten zweidimensionalen Symbolbarcode eingeschlossen sind.

## Revendications

1. Procédé de création d'un document d'identification, le procédé comprenant :
l'obtention de données identifiant un individu, comprenant une image de l'individu, des données biométriques et des données d'identification personnelles ;
l'enregistrement des données obtenues sur une base de données centrale ;
l'impression d'un premier code-barres symbolique bidimensionnel (20) sur le document d'identification, le premier code-barres ayant une densité relativement élevée et comprenant l'image de l'individu, les données biométriques et les données d'identification personnelles ; et
l'impression d'un second code-barres symbolique bidimensionnel (22) sur le document d'identification, le second code-barres ayant une densité relativement faible et comprenant lesdites données d'identification personnelles et d'autres données destinées à être utilisées dans un processus d'identification biométrique.

2. Procédé selon la revendication 1, dans lequel le document d'identification est imprimé avec des informations discernables par l'être humain, notamment une image de l'individu correspondant à l'image de l'individu incluse dans le premier code-barres symbolique bidimensionnel et les données d'identification personnelles comprises à la fois dans le premier et le second code-barres symbolique bidimensionnel.

3. Procédé selon la revendication 1 ou 2, dans lequel les données biométriques comprennent des données d'empreinte digitale obtenues à partir de l'individu.

4. Procédé selon l'une quelconque des revendications 1 à 3, dans lequel les données biométriques comprennent des données d'empreinte vocale obtenues à partir de l'individu.

5. Procédé selon l'une quelconque des revendications 1 à 4, dans lequel les données incluses dans le premier et/ou le second code-barres sont cryptées.

6. Procédé selon la revendication 4, dans lequel les données contenues dans le second code-barres destinées à être utilisées dans le processus d'identification biométrique sont un mot de passe correspondant à un mot de passe prononcé par l'utilisation au moment de l'obtention des données d'empreinte vocale.

7. Procédé selon la revendication 6, dans lequel le mot de passe et les données d'empreinte vocale correspondantes sont stockés dans la base de données centrale pour une utilisation successive dans le processus d'identification biométrique.

8. Procédé selon l'une quelconque des revendications 1 à 7, dans lequel le premier code-barres a une densité suffisamment élevée pour nécessiter l'utilisation d'un scanner spécialisé et d'un logiciel associé pour lire et décrypter le contenu du code-barres.

9. Procédé selon l'une quelconque des revendications 1 à 8, dans lequel le second code-barres a une densité suffisamment faible pour être imagé par un dispositif d'imagerie traditionnel ayant une résolution d'imagerie inférieure ou égale à 200 ppp.

10. Procédé d'authentification d'un document d'identification comprenant un substrat sur lequel est imprimé un premier code-barres symbolique bidimensionnel (20), le premier code-barres ayant une densité relativement élevée et comprenant l'image de l'individu, les données biométriques et les données d'identification personnelles ; et un second code-barres symbolique bidimensionnel (22), le second code-barres ayant une densité relativement faible et comprenant lesdites données d'identification personnelles et d'autres données destinées à être utilisées dans un processus d'identification biométrique, ledit procédé comprenant :
l'obtention d'une image du second code-barres symbolique bidimensionnel d'un document d'identification devant être authentifié ;
la transmission de l'image à un centre d'authentification ;
le décodage de l'image pour extraire les données contenues dans celle-ci ; et
l'authentification du document d'identification en comparant les données extraites avec les données enregistrées respectives par l'intermédiaire du centre d'authentification.

11. Procédé selon la revendication 10, dans lequel l'image du second code-barres est obtenue avec une machine facsimile ou un appareil photographique numérique ayant une résolution d'image inférieure ou égale à 200 ppp.

12. Procédé selon la revendication 10 ou 11, dans lequel l'étape d'authentification comprend la réception des données d'identification courantes à partir de l'utilisateur, la transmission desdites données d'identification courantes au centre d'authentification, et la comparaison des données d'identification courantes reçues avec les données dans la base de données centrale et les données extraites du second code-barres symbolique bidimensionnel du document d'identification.

13. Procédé selon la revendication 12, dans lequel les données d'identification courantes reçues de l'utilisateur sont des données biométriques.

14. Procédé selon la revendication 13, dans lequel les données d'identification sont des données d'empreinte digitale obtenues à partir de l'utilisateur.

15. Procédé selon la revendication 13, dans lequel les données d'identification sont des données d'empreinte vocale obtenues à partir de l'individu.

16. Procédé selon la revendication 15, dans lequel les données d'empreinte vocale sont obtenues et transmises au centre d'authentification au moyen d'un téléphone mobile.

17. Procédé selon l'une quelconque des revendications 10 à 16, dans lequel l'image du second code-barres bidimensionnel est obtenue et transmise au centre d'authentification par un téléphone mobile équipé d'un appareil photographique.

18. Document d'identification comprenant un substrat sur lequel un premier code-barres symbolique bidimensionnel (20) est imprimé, le premier code-barres ayant une densité relativement élevée et comprenant l'image de l'individu, des données biométriques et des données d'identification personnelles, et un second code-barres symbolique bidimensionnel (22), le second code-barres ayant une densité relativement faible et comprenant lesdites données d'identification personnelles et d'autres données destinées à être utilisées dans un processus d'identification biométrique.

19. Document d'identification selon la revendication 18, sur lequel des informations discernables par l'être humain sont imprimées, notamment une image de l'individu correspondant à l'image de l'individu incluse dans le premier code-barres symbolique bidimensionnel et les données d'identification personnelles comprises à la fois dans le premier et le second code-barres symbolique bidimensionnel.
